# EUROPÄISCHE PATENTSCHRIFT

(11) **EP 0 330 165 B1**
(45) Veröffentlichungstag und Bekanntmachung des Hinweises auf die Patenterteilung: **25.08.1993**
(21) Anmeldenummer: 89103066.0
(22) Anmeldetag: 22.02.1989
(51) Int. Cl.: G08G 1/09, G08G 1/095

(54) **Sende- und Empfangseinrichtung für die Informationsübertragung im Infrarotbereich**
Infrared band information transmission emitting and receiving device
Dispositif d'émission et de réception pour la transmission d'informations dans la bande infrarouge

(30) Priorität: 25.02.1988 DE 8802482 U; 20.04.1988 DE 8805252 U
(43) Veröffentlichungstag der Anmeldung: 30.08.1989
(73) Patentinhaber: SIEMENS AKTIENGESELLSCHAFT, 80333 München (DE)
(72) Erfinder: von Tomkewitsch, Romuald, Dipl.-Ing., D-8026 Ebenhausen (DE); Krautwald, Herbert, Dipl.-Ing., D-8000 München 90 (DE)

(56) Entgegenhaltungen:
- EP-A- 0 235 678
- DE-A- 2 923 634

## Beschreibung

Die Erfindung betrifft eine Sende- und Empfangseinrichtung für die Informationsübertragung im Infrarotlichtbereich, zwischen ortsfesten Baken und ortsveränderlichen Kraftfahrzeugen, wobei in einem Gehäuse Sende- und Empfangsdioden mit Strahlrichtung zu einer infrarotlichtdurchlässigen Frontwand, die von einer Abdeckscheibe gebildet ist, auf einer Leiterplatten-Baugruppe angeordnet sind.

Derartige Übertragungseinrichtungen sind für ein Verkehrsleitsystem, wie beispielsweise in der DE-PS 29 23 634 beschrieben, erforderlich. In der DE-OS 36 05 681 ist bereits eine Einrichtung zur Informationsübertragung mittels Infrarotstrahlung beschrieben. Dabei ist die Sende- und Empfangseinrichtung zwischen dem Innenrückspiegel des Fahrzeugs und der Frontscheibe eingebaut. Im Gehäuseinneren dieser Einrichtung sind in einem weniger tief ausgelegten Bereich die Sendedioden in mindestens zwei übereinander liegenden Reihen hinter der Frontscheibe ohne dazwischenliegende oder sonstige optische Linsen angeordnet. Im hinteren Bereich eines tieferen Gehäusebereichs sind Empfangsdioden und davor ist eine Sammellinse für die einfallenden Lichtstrahlen angeordnet. Dies hat jedoch den Nachteil, daß zwischen der Frontwand bzw. der Abdeckscheibe und den Empfangsdioden eigens die Sammellinse justiert werden muß. Des weiteren erhöht sich der optische Oberflächenverlust, weil die einfallenden Infrarotlichtstrahlen vier Grenzflächen durchdringen müssen. Bei den Sendedioden ist aufgrund einer fehlenden Optik eine Ausrichtung der abgestrahlten Lichtstrahlen nicht vorgesehen. Das hat den Nachteil, daß die Sendedioden auch sehr stark vertikal abstrahlen, so daß die abgestrahlte Lichtenergie nach oben und unten verloren geht, weil sie keinen Beitrag für die Übertragung zu den Baken am Straßenrand bzw. zu den Empfangsdioden am Lichtsignalgeber leistet.

Für eine Anordnung einer Sende- und Empfangseinrichtung an einer Bake wurde eine Leiterplatten-Baugruppe mit Sende- und Empfangsdioden in einem Gehäuse eines Signalgebers angeordnet. Dabei wurde eine Sende- und Empfangsoptik über U-förmige Metallwinkel an der Leiterplatten-Baugruppe befestigt. Die Optik und die Dioden mußten eigens justiert und ausgerichtet werden. Die gesamte Vorrichtung wurde in der Wanne des Signalgebergehäuses befestigt. Die Frontwand des Signalgebers wies anstelle der Streuscheibe eine durchsichtige Kunststoff-Abdeckscheibe auf, die außerhalb des Bereichs für den Lichtaustritt für die Sende- und Empfangssignale abgedeckt oder bedruckt ist.

Aufgabe der Erfindung ist es daher, die oben geschilderten Nachteile zu vermeiden und eine eingangs beschriebene Sende-und Empfangseinrichtung dahingehend auszubilden, daß eine verlustarme Datenübertragung zwischen ortsfesten Baken und der Einrichtung im sich bewegenden Fahrzeug (Transceiver) erreicht wird. Insbesondere soll eine Informationsbake geschaffen werden, die kostengünstig und mit geringem Montageplatz an Masten von Verkehrslicht-Signalgebern angebracht werden kann.

Diese Aufgabe wird bei einer der oben beschriebenen Sende- und Empfangseinrichtung dadurch gelöst, daß die Abdeckscheibe zugleich als integrierte Sende- und Empfangslinse einstückig ausgebildet ist, daß das Gehäuse vom Gehäuse eines Lichtsignalgebers für den Straßenverkehr gebildet ist, daß die Abdeckscheibe bzw. Linseneinheit in der verschwenkbaren Tür des Signalgebers angeordnet ist, und daß an der Innenseite der Tür oder an der Abdeckscheibe zumindest zwei Distanzträger zur Aufnahme der Leiterplatten-Baugruppe angeformt sind.

Die Integration der Abdeckscheibe mit der Empfängerlinse und den Sendelinsen als einstückiges Teil hat den Vorteil, daß es als ein Spritzteil hergestellt werden kann. Ein weiterer Vorteil ist dadurch gegeben, daß unnötige optische Oberflächenverluste an den jeweiligen Grenzflächen vermieden werden, weil die lichtdurchlässige Abdeckscheibe und die daran angeformte Linse einstückig ist, so daß maximal zwei zu durchdringende Grenzflächen im Gegensatz zu vier Grenzflächen vorhanden sind. Ferner wird eine Zentrizitätsabweichung durch die mechanischen Aufbautoleranzen der Linsenbefestigungen mit der erfindungsgemäß ausgebildeten Abdeckscheibe vermieden. Darüberhinaus werden hierdurch zusätzliche Abweichungen zwischen Sende- und Empfangslinsen in der Zuordnung zu den Empfangs- und Sendedioden vermieden.

In einer vorteilhaften Ausgestaltung der Erfindung ist die Abdeckscheibe auf der Außenseite plan und die Innenseite linsenförmig ausgebildet. Das hat den Vorteil, daß die Frontwand der Sende- und Empfangseinrichtung ohne weiteres gereinigt werden kann.

Zweckmäßigerweise ist die Abdeckscheibe im Bereich der Empfangsdioden als sphärische Linse ausgebildet und im Bereich der Sendedioden als horizontal verlaufende, übereinander angeordnete Zylinderlinsen. Mit der sphärisch ausgebildeten Empfängerlinse wird eine scharfe optische, sogenannte Abrißkante erhalten, die zur Minderung der Störeinflüsse von Fremdlicht, z.B. Sonneneinstrahlung von oben, beiträgt.

Das von einem Sender kommende Licht wird auf die Empfängerdioden nicht als scharfer Brennpunkt bzw. Brennlinie abgebildet, sondern als eine aktive Brennfläche bzw. Brennsteg.

Mit der zylindrisch horizontalen Gestaltung der Sendelinsen wird für den Verkehrsraum ein großer horizontaler, aber ein sehr kleiner vertikaler Abstrahlwinkel erreicht, so daß das von der Sendediode abgestrahlte Licht gebündelt in dem Bereich austritt, in dem auch die Empfangsdioden sind. Die Sende- und Empfangseinrichtungen der Kraftfahrzeuge und der Bake sind zueinander ausgerichtet. Damit wird im Empfangsbereich sowohl der Baken als auch in den Kraftfahrzeugen eine geringere Störbeeinflussung der Datenübertragung durch die Sonne möglich. Dabei ist die Abdeckscheibe in der schwenkbaren Tür eines Signalgebers angeordnet, wobei an der Innenseite der Abdeckscheibe außerhalb der angeformten Linsen zumindest zwei Distanzträger mit angeformt sind, die eine Leiterplatten-Baugruppe mit den dort angebrachten Sende- und Empfangsdioden aufnehmen. Beispielsweise kann die Leiterplatten-Baugruppe auf den Distanzträgern mit Schrauben befestigt sein. Hierfür kann in vorteilhafter Weise jeder Distanzträger einen Zentrierring aufweisen, der eine exakte und genaue Befestigung des Baugruppenträgers ermöglicht, so daß die dort angebrachten Sende- und Empfangsdioden genau zu den Linsen ausgerichtet sind.

In einer vorteilhaften und äußerst zweckmäßigen Weiterbildung der Erfindung ist die Linseneinheit mit den zugeordneten Sende-und Empfangsdioden gemeinsam mit dem eigentlichen Signalgeber im Signalgeber-Gehäuse angeordnet.

Um in einem bestehenden Signalgebergehäuse gemeinsam den eigentlichen Signalgeber und die erfindungsgemäße Sende- und Empfangseinrichtung in vorteilhafter Weise nachzurüsten, ist es zweckmäßig, ein großes Signalgeber-Gehäuse (für 300 mm Durchmesser) zu verwenden. Es ist lediglich die Tür erfindungsgemäß so ausgebildet, daß in diesem Signalgeber-Gehäuse der eigentliche Signalgeber mit einer Streuscheibe von 200 mm Durchmesser exzentrisch und daneben die Linseneinheit in der Tür angeordnet sind. Dabei kann die Linseneinheit unterhalb der Streuscheibe angeordnet sein und an der Außenseite der Tür mit einer teilumlaufenden, d.h. nach unten offenen Schute, versehen sein.

In einer zusätzlichen Weiterbildung der Erfindung kann die komplette Tür des Signalgebers aus infrarotlichtdurchlässigem Material mit den im Bereich der Sende- und Empfangsdioden integrierten Sende- und Empfangslinsen gebildet sein.

Die Erfindung kann in einem der Signalgeber für die drei Farben rot, gelb, grün vorgesehen werden. Vorzugsweise wird man den roten Signalgeber für die Sende- und Empfangseinrichtung vorsehen, weil das große Signalgebergehäuse auch mit der kleinen, d.h. normalen Streuscheibe (200 mm Durchmesser) die Auffälligkeit des Rotlichts erhöht.

In einer vorteilhaften Ausgestaltung der Erfindung ist jeder Sendediodenreihe, die horizontal verläuft, eine zylinderförmige Linse zugeordnet. Dabei kann es zweckmäßig sein, zusätzlich über die Anzahl der erforderlichen zylinderförmigen Linsen am oberen und unteren Rand im optischen, d.h. lichtdurchlässigen Bereich der Abdeckscheibe jeweils noch eine zusätzliche Zylinderlinse anzuformen. Dies erhöht die Stabilität der Abdeckscheibe.

Die Erfindung wird an Ausführungsbeispielen anhand der Zeichnung erläutert. Dabei zeigen
Fig. 1 eine bisherige Sende- und Empfangseinrichtung in einem Signalgebergehäuse,
Fig. 2 eine erfindungsgemäß ausgestaltete Sende- und Empfangseinrichtung im Signalgebergehäuse,
Fig. 3 eine Detailansicht III nach der Fig. 2,
Fig. 4 und 5 weitere Ausführungsbeispiele der Erfindung,
Fig. 6 in Frontansicht und
Fig. 7 in Seitenansicht, teilweise geschnitten.

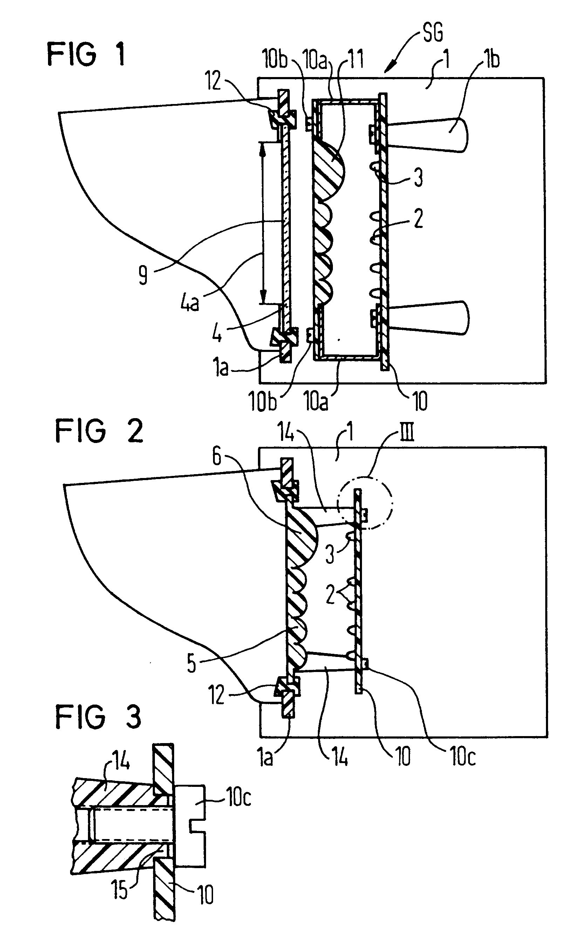

In der Fig. 1 ist eine bisherige Sende- und Empfangseinrichtung gezeigt. Diese befindet sich im Inneren eines üblichen Signalgebergehäuses 1. Die schwenkbare Tür 1a des Signalgebers weist eine im allgemeinen plane Abdeckscheibe 4 auf, die aus Kunststoff sein kann. Außerhalb des Bereichs 4a für den Lichtdurchtritt, der dem Bereich der Sende- und Empfangsoptik 11 zugeordnet ist, ist die Abdeckscheibe 4 lichtundurchlässig gemacht, indem sie entweder abgeklebt oder bedruckt wurde. Die Sende- und Empfangsoptik 11 ist mit Schrauben 10b am Metallwinkel 10a befestigt. Dieser U-förmige Metallwinkel 10a mit der Leiterplatten-Baugruppe 10 und den Sende- und Empfangsdioden 2,3 ist an vier Wannensäulen 1b befestigt.

Die erfindungsgemäße Einrichtung nach Fig.2 weist eine Einheit aus Sende-und Empfangsoptik 5 und 6 zugleich mit der Abdeckscheibe 4 auf. Diese Einheit ist unmittelbar in der Türe 1a des Signalgebergehäuses 1 mit der Profil-Gummidichtung 12 befestigt. Zusätzlich sind an dieser Abdeckscheibe-Linseneinheit Distanzträger 14 mit angeformt, auf die in entsprechend richtiger Zuordnung die Leiterplatten-Baugruppe 10 angeordnet ist. In der Detailzeichnung (III) gemäß der Fig.3 ist dies deutlicher dargestellt. Die Distanzträger 14 weisen Zentrierringe 15 auf, in die die entsprechenden Ausnehmungen der Leiterplatten-Baugruppe 10 passen. Mit Schrauben 10c ist der Baugruppenträger 10 auf dem Distanzträger 14 exakt befestigt, so daß keine weitere Justierung notwendig ist.

Die Abdeckscheibe 4 bzw. 5 und 6 ist zweckmäßigerweise aus einem sehr dunklen, jedoch infrarotlichtdurchlässigen Werkstoff, so daß ein zusätzliches Bedrucken der Abdeckung nicht mehr erforderlich ist. Diese schwarz scheinende Fläche bietet dem Betrachter ein neutrales Bild, so daß die Sende- und Empfangseinrichtung im Signalgebergehäuse keinen Verkehrssignalgeber vortäuscht oder als versteckte Uberwachungseinrichtung ausgelegt werden kann. Durch die Zentrieraufnahme 15 für die Baugruppe 10 auf den Distanzträgern 14, die unmittelbar an der Abdeckscheibe-Linseneinheit angeformt sind, entfällt ein zusätzliches Justieren von Linsenachse zu Diodenachse. Das hat den Vorteil, daß sich die Montagezeiten reduzieren, und daß durch den Wegfall der Justiertoleranzen eine weitere Steigerung des Sende- und Empfangswirkungsgrades erreicht wird. Die unmittelbare Anbringung der Sende- und Empfangseinrichtung an der schwenkbaren Tür bringt den Vorteil mit sich, daß keine zusätzlichen Befestigungsschrauben erforderlich sind, und daß bei geöffneter Tür für die Wartung die Baugruppe besser zugänglich ist.

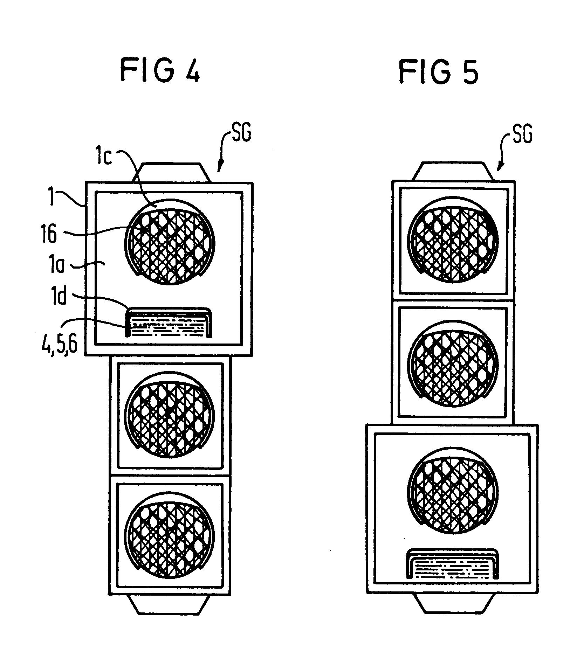

In Fig. 4 ist die Sende-und Empfangseinrichtung mit einer normalen Streuscheibe 16 im großen Signalgebergehäuse 1 für das Rotlicht angeordnet, in der Fig.5 im Signalgebergehäuse für das Grünlicht. In beiden Fällen ist unterhalb der Streuscheibe 16 die Sende- und Empfangslinseneinheit 4,5,6 mit der umlaufenden Schute 1d angeordnet. Wie bereits ausgeführt, wird bei der Anordnung nach Fig.4 die Auffälligkeit des Rotlichts erhöht, während bei der Anordnung gemäß der Fig.5 von der größeren Entfernung aus betrachtet das Signalgeberfeld trotz des größeren Signalgebergehäuses das gewohnte Bild für die Signalfarbenabstände zeigt. Bei dieser Anordnung ist auch sichergestellt, daß der Infrarot-Dateninformationsaustausch auch im unmittelbaren Nahbereich nicht durch eine Schute 1c des eigentlichen Signalgebers SG abgeschaltet werden kann.

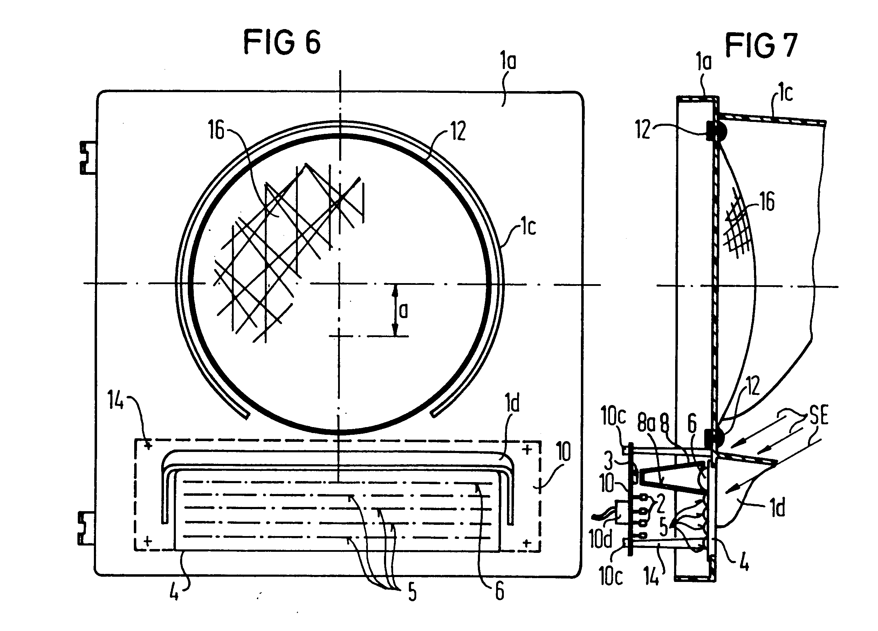

Die Einzelheiten der Erfindung sind aus den Figuren 6 und 7 ersichtlich. Im Signalgeber (SG) ist im Gehäuse 1 für die große Streuscheibe mit 300 mm Durchmesser im Türdeckel 1a die Streuscheibe 16 mit 200 mm Durchmesser exzentrisch, beispielsweise im Abstand a vom Mittelpunkt angeordnet. Sie sitzt in hergebrachter Weise mit einer Gummidichtng 12 in der Türe 1a und wird nahezu umschlossen von der Schute 1c. Darunter befindet sich entweder wasserdicht eingespritzt, wie hier in der Zeichnung angedeutet, oder wie die Streuscheibe über eine Gummidichtung 12 gehalten, die Sende- und Empfangsoptik 5 und 6, die zugleich die Abdeckscheibe 4 darstellt. Sie ist als einstückiges Spritzteil im allgemeinen in schwarz, jedoch infrarotdurchlässig aus einem geeigneten Kunststoff gefertigt. Es kann auch der komplette Türdeckel 1a aus schwarzen, infrarotdurchlässigem Werkstoff gefertigt sein, wobei im Sende- und Empfangsdiodenbereich die Sende- und Empfangsoptik 5 und 6 mit angeformt ist. Um die Empfangsoptik 6 und die dahinter auf der Baugruppen-Leiterplatte 10 angeordneten Empfangsdioden 3 nicht durch tiefstehende störende Sonneneinstrahlung SE zu beeinträchtigen, ist zur Abschattung die außen angeordnete teilumlaufende Schute 1d angeordnet. Diese kann beispielsweise am Türdeckel 1a mit angespritzt sein.

Bei diesem Ausführungsbeispiel ist die Empfangslinse 6 über den Sendelinsen 5 angeordnet. Es kann aber auch die Empfangslinse 6 neben den Sendelinsen 5 angeordnet sein, wie dies in der Gebrauchsmusteranmeldung G 87 13 878.6 beschrieben ist. Hinter der Empfangslinse 6 ist ein Lichteintrittsschacht 8 angeordnet, der beispielsweise so ausgebildet sein kann, wie er in der Gebrauchsmusteranmeldung G 87 13 877.8 beschrieben ist. Dabei kann aufgrund der über der Linseneinheit 5,6 angeordneten Schute 1d der lichtabsorbierende Belag auf dem unteren Bodenblech 8a des Lichteintrittsschachts 8 entfallen, weil die bei tiefstehender Sonne einfallenden und sich störend auswirkenden Sonnenstrahlen für die Empfangsdioden 3 durch die Schute 1d abgeschattet werden. Am Türdeckel 1a liegen im Bereich der Sende- und Empfangsoptik 5,6 angespritzte Distanzträger 14, die zur Aufnahme der Baugruppen-Leiterplatte 10 dienen, die über einen Stecker 10d kontaktiert ist. Die Distanzträger 14 können an der Tür 1a oder an der Linseneinheit 5,6 angeformt sein. Hinter den Sendelinsen 5 sind auf der Baugruppenleiterplatte 10 die Sendedioden 2 angeordnet. Die Baugruppen-Leiterplatte 10 ist mit Schrauben 10c auf dem Distanzträger 14 befestigt.

## Patentansprüche

1. Sende- und Empfangseinrichtung für die Informationsübertragung im Infrarotlichtbereich zwischen ortsfesten Baken und ortsveränderlichen Kraftfahrzeugen, wobei in einem Gehäuse Sende- und Empfangsdioden (2,3) mit Strahlrichtung zu einer infrarotlichtdurchlässigen Frontwand, die von einer Abdeckscheibe (4) gebildet ist, auf einer Leiterplatten-Baugruppe (10) angeordnet sind,
**dadurch gekennzeichnet,** daß die Abdeckscheibe (4) zugleich als integrierte Sende- und Empfangslinsen (5,6) einstückig ausgebildet ist, daß das Gehäuse vom Gehäuse (1) eines Licht-Signalgebers (SG) für den Straßenverkehr gebildet ist, daß die Abdeckscheibe (4) bzw. Linseneinheit (5,6) in der verschwenkbaren Tür (1a) des Signalgebers (SG) angeordent ist, und daß an der Innenseite der Tür (1a) oder an der Abdeckscheibe (4) zumindest zwei Distanzträger (14) zur Aufnahme der Leiterplatten-Baugruppe (10) angeformt sind.

2. Sende- und Empfangseinrichtung nach Anspruch 1, **dadurch gekennzeichnet,** daß die Linseneinheit (5,6) mit einer Profil-Gummidichtung (12) in der Gehäusetür (1a) befestigt ist.

3. Sende- und Empfangseinrichtung nach Anspruch 1 oder 2, **dadurch gekennzeichnet,** daß die Linseneinheit (5,6) mit den zugeordneten Sende- und Empfangsdioden (2,3) gemeinsam mit dem eigentlichen Signalgeber im Gehäuse (1) des Signalgebers (SG) angeordnet ist.

4. Sende- und Empfangseinrichtung nach Anspruch 3, **dadurch gekennzeichnet,** daß im Signalgeber-Gehäuse für Streuscheiben mit 300 mm Durchmesser der eigentliche Signalgeber mit einer Streuscheibe (16) mit 200 mm Durchmesser exzentrisch und daneben die Linseneinheit (5,6) in der Tür (1a) angeordnet sind.

5. Sende- und Empfangseinrichtung nach Anspruch 1 oder 2, **dadurch gekennzeichnet,** daß die Abdeckscheibe (4) die Maße einer Streuscheibe mit 200 mm Durchmesser aufweist und an deren Stelle in der Türe (1a) angeordnet ist, wobei im Bereich der Sende- und Empfangsdioden (2,3) die integrierten Sende- und Empfangslinsen (5,6) angeformt sind.

6. Sende- und Empfangseinrichtung nach einem der Ansprüche 2 bis 4, **dadurch gekennzeichnet,** daß die komplette Tür (1a) des Signalgebers (SG) aus infrarotlichtdurchlässigem Material mit im Bereich der Sende- und Empfangsdioden (2,3) integrierten Sende- und Empfangslinsen (5,6) gebildet ist.

7. Sende- und Empfangseinrichtung nach einem der vorhergehenden Ansprüche, **dadurch gekennzeichnet,** daß an der Außenseite der Tür (1a) um die Abdeckscheibe (4) eine teilumlaufende Schute (1d bzw. 1c) angeordnet ist.

8. Sende- und Empfangseinrichtung nach Anspruch 4, **dadurch gekennzeichnet,** daß die Linseneinheit (5,6) unterhalb der Streuscheibe (16) angeordnet ist.

9. Sende- und Empfangseinrichtung nach Anspruch 8, **dadurch gekennzeichnet,** daß sie im Gehäuse (1) des Signalgebers (SG) für das Rotlicht oder das Grünlicht angeordnet ist.

10. Sende- und Empfangseinrichtung nach Anspruch 1, **dadurch gekennzeichnet,** daß jeder Distanzträger (14) einen Zentrierring (15) aufweist.

11. Sende- und Empfangseinrichtung nach Anspruch 1, **dadurch gekennzeichnet,** daß die Abdeckscheibe (4) auf der Außenseite plan und die Innenseite linsenförmig ausgebildet ist.

12. Sende- und Empfangseinrichtung nach Anspruch 1 oder 2, **dadurch gekennzeichnet,** daß die Abdeckscheibe (4) im Bereich der Empfangsdioden (3) eine sphärisch ausgebildete Empfangslinse (6) und im Bereich der Sendedioden (2) horizontal verlaufende, zylinderförmig ausgebildete Sendelinsen (5) aufweist.

13. Sende- und Empfangseinrichtung nach Anspruch 3, **dadurch gekennzeichnet,** daß den übereinanderliegenden Reihen von Sendedioden (2) jeweils eine zylinderförmige Linse (5) längs einer Sendediodenreihe zugeordnet ist.

## Claims

1. Transmitting and receiving device for information transfer in the infrared light region between fixed beacons and mobile motor vehicles, transmitting and receiving diodes (2, 3) having a beam direction towards an infrared-transparent front wall which is formed from a cover plate (4) being arranged in a housing on a printed circuit board module (10), characterised in that the cover plate (4) is simultaneously constructed in one piece as integrated transmitting and receiving lenses (5, 6), in that the housing is constructed from the housing (1) of a light signal transmitter (SG) for road traffic, in that the cover plate (4) or lens unit (5, 6) is arranged in the pivotable door (1a) of the signal transmitter (SG), and in that at least two spacer supports (14) for accommodating the printed circuit board module (10) are integrally formed on the inside of the door (1a) or on the cover plate (4).

2. Transmitting and receiving device according to Claim 1, characterised in that the lens unit (5, 6) is mounted in the housing door (1a) by means of a profile rubber seal (12).

3. Transmitting and receiving device according to Claim 1 or 2, characterised in that the lens unit (5, 6) with the assigned transmitting and receiving diodes (2, 3) is arranged together with the actual signal transmitter in the housing (1) of the signal transmitter (SG).

4. Transmitting and receiving device according to Claim 3, characterised in that for diffusing panels with a diameter of 300 mm the actual signal transmitter is arranged eccentrically with a diffusing panel (16) with a diameter of 200 mm eccentrically in the signal transmitter housing and the lens unit (5, 6) is arranged alongside in the door (1a).

5. Transmitting and receiving device according to Claim 1 or 2, characterised in that the cover plate (4) has the dimensions of a diffusing panel with a diameter of 200 mm and is arranged at the location thereof in the door (1a), the integrated transmitting and receiving lenses (5, 6) being integrally formed in the region of the transmitting and receiving diodes (2, 3).

6. Transmitting and receiving device according to one of Claims 2 to 4, characterised in that the complete door (1a) of the signal transmitter (SG) is formed from infrared-transparent material with integrated transmitting and receiving lenses (5, 6) in the region of the transmitting and receiving diodes (2, 3).

7. Transmitting and receiving device according to one of the preceding claims, characterised in that a partially circumferential bonnet (1d or 1c) is arranged on the outside of the door (1a) around the cover plate (4).

8. Transmitting and receiving device according to Claim 4, characterised in that the lens unit (5, 6) is arranged below the diffusing panel (16).

9. Transmitting and receiving device according to Claim 8, characterised in that it is arranged in the housing (1) of the signal transmitter (SG) for the red light or the green light.

10. Transmitting and receiving device according to Claim 1, characterised in that each spacer support (14) has a centring ring (15).

11. Transmitting and receiving device according to Claim 1, characterised in that the cover plate (4) is constructed plane on the outside and the inside is constructed in the shape of a lens.

12. Transmitting and receiving device according to Claim 1 or 2, characterised in that the cover plate (4) has a spherically constructed receiving lens (6) in the region of the receiving diodes (3) and a horizontally extending, cylindrically constructed transmitting lens (5) in the region of the transmitting diodes (2).

13. Transmitting and receiving device according to Claim 3, characterised in that a cylindrical lens (5) is assigned to the superimposed rows of transmitting diodes (2) along a row of transmitting diodes in each case.

## Revendications

1. Dispositif d'émission et de réception pour la transmission d'informations dans le domaine de la lumière infrarouge entre des balises fixes et des véhicules automobiles dont les positions sont variables, du type dans lequel des diodes d'émission et de réception (2,3), dont la direction du rayonnement est dirigée vers une paroi frontale qui est transparente pour le rayonnement infrarouge et qui est formée par une plaque de fermeture (4), sont disposées dans un boîtier, sur un module de plaquette à circuits imprimés (10),
caractérisé par le fait que la plaque de fermeture (4) est réalisée en même temps et d'un seul tenant sous la forme de lentilles intégrées d'émission et de réception (5,6), que le boîtier est formé par le boîtier (1) d'un feu de signalisation lumineux (SG) pour le trafic routier, que la plaque de fermeture (4) ou l'unité à lentilles (5,6) est disposée dans la porte pivotante (1a) du feu de signalisation (SG) et qu'au moins deux supports-entretoises (4) servant à recevoir le module de plaquette à circuits imprimés (10) sont formés sur le côté intérieur de la porte (1a) ou sur la plaque de fermeture (4).

2. Dispositif d'émission et de réception suivant la revendication 1, caractérisé par le fait que l'unité à lentilles (5,6) est fixée au moyen d'une garniture d'étanchéité profilée en caoutchouc (12) dans la porte (1a) du boîtier.

3. Dispositif d'émission et de réception suivant la revendication 1 ou 2, caractérisé par le fait que l'unité à lentilles (5,6) pourvue des diodes d'émission et de réception (2,3) associées, est disposée, conjointement avec le feu de signalisation proprement dit (SG), dans le boîtier (1) de ce dernier.

4. Dispositif d'émission et de réception suivant la revendication 3, caractérisé par le fait que dans le boîtier du feu, pour des verres diffusants d'un diamètre de 300 mm, le feu proprement dit pourvu d'un disque diffusant (16) possédant un diamètre de 200 mm, est monté de façon excentrée et que l'unité à lentilles (5,6) est disposée, à côté, dans la porte (1a).

5. Dispositif d'émission et de réception suivant la revendication 1 ou 2, caractérisé par le fait que la plaque de fermeture (4) possède des dimensions d'un disque diffusant d'un diamètre de 200 mm et est disposée à la place de ce disque dans la porte (1a), les lentilles intégrées d'émission et de réception (5,6) étant formées dans la zone des diodes d'émission et de réception (2,3).

6. Dispositif d'émission et de réception suivant l'une des revendications 2 à 4, caractérisé par le fait que l'ensemble de portes (1a) du feu de signalisation (SG) est réalisé en un matériau transparent pour le rayonnement infrarouge et comporte des lentilles d'émission et de réception (5,6) qui sont intégrées au voisinage des diodes d'émission et de réception (2,3).

7. Dispositif d'émission et de réception suivant l'une des revendications précédentes, caractérisé par le fait qu'un capot partiellement enveloppant (1d ou 1c) est disposé sur le côté extérieur de la porte (1a) autour de la plaque de fermeture (4).

8. Dispositif d'émission et de réception suivant la revendication 4, caractérisé par le fait que l'unité à lentilles (5,6) est disposée au-dessous du disque diffusant (16).

9. Dispositif d'émission et de réception suivant la revendication 8, caractérisé par le fait qu'il est disposé dans le boîtier (1) du feu de signalisation (SG) pour la lumière rouge ou la lumière verte.

10. Dispositif d'émission et de réception suivant la revendication 1, caractérisé par le fait que chaque support-entretoise (14) possède une bague de centrage (15).

11. Dispositif d'émission et de réception suivant la revendication 1, caractérisé par le fait que la plaque de fermeture (4) est disposée à plat sur la face extérieure et que la face intérieure est réalisée avec une forme de lentille.

12. Dispositif d'émission et de réception suivant la revendication 1 ou 2, caractérisé par le fait que la plaque de fermeture (4) possède, dans la zone des diodes de réception (3), une lentille de réception sphérique (6) et, dans la zone des diodes d'émission (2), des lentilles d'émission horizontales, réalisées avec une forme cylindrique (5).

13. Dispositif d'émission et de réception suivant la revendication 3, caractérisé par le fait que respectivement une lentille de forme cylindrique (5) est associée, le long d'une rangée de diodes d'émission, aux rangées superposées de diodes d'émission (2).
